Europäisches Patentamt

European Patent Office

Office européen des brevets

(11) Publication number: **0 114 893**
**B1**

# EUROPEAN PATENT SPECIFICATION

(45) Date of publication of patent specification: **31.08.88**

(51) Int. Cl.⁴: **B 23 K 9/04**

(21) Application number: **83902121.9**

(22) Date of filing: **29.06.83**

(86) International application number:
**PCT/JP83/00206**

(87) International publication number:
**WO 84/00122 19.01.84 Gazette 84/02**

(54) BUILD-UP WELDING METHOD.

(30) Priority: **29.06.82 JP 110739/82**

(43) Date of publication of application:
**08.08.84 Bulletin 84/32**

(45) Publication of the grant of the patent:
**31.08.88 Bulletin 88/35**

(84) Designated Contracting States:
**CH DE FR LI SE**

(56) References cited:
**GB-A-1 464 846
JP-A-51 131 436
JP-A-52 072 347
JP-A-52 117 850
JP-A-55 117 562
JP-B-56 007 792
US-A-4 224 360**

(73) Proprietor: **KAWASAKI STEEL CORPORATION
No. 1-28, 1-Chome Kitahonmachi-Dori
Chuo-Ku, Kobe-Shi Hyogo 651 (JP)**

(72) Inventor: **YASUDA, Koichi
1,Kawasaki - Cho
Chiba City (JP)**
Inventor: **NAKANO, Syozaburo
2220-6, Nagao Mobara-shi
Chiba 297 (JP)**
Inventor: **NISHIYAMA, Noboru
4617-2, Goi Ichihara-shi
Chiba 290 (JP)**

(74) Representative: **Overbury, Richard Douglas et al
HASELTINE LAKE & CO Hazlitt House
28 Southampton Buildings Chancery Lane
London WC2A 1AT (GB)**

Courier Press, Leamington Spa, England.

## Description

### Technical field

The present invention relates to an overlay welding method and particularly to a method of forming a lining composed of an overlay welded metal on the surface of a base metal of carbon steel, low alloy steel or the like in a chemical reactor vessel which is used for handling high-temperature, high-pressure hydrogen or other vessels used for similar applications.

### Background Art

Such a lining is in most cases formed by overlay welding stainless steel or nickel alloy on the inner surface of the base metal wall of a desulfurizing reactor for petroleum-refining, which is used in a high-temperature, high pressure hydrogen environment, in order to ensure corrosion resistance.

During operation of the reactor in such an environment, hydrogen is absorbed into the base metal of the vessel wall from the surface layer of the overlay welded metal because of the high temperature and high pressure and diffuses through the base metal towards the outer surface of the vessel wall.

However, when the operation of such a reactor vessel is interrupted, that is in the case of shutdown, separating cracks (referred to as "disbonding" hereinafter) may be caused at the welded metal side in the boundary portion between the base metal and the welded metal.

The cause of disbonding is believed to be as follows. Namely, when the temperature of the vessel is lowered due to the shutdown, the hydrogen activity coefficients in the welded metal (austenite phase) and the base metal (ferrite phase) are both increased but the increase in the base metal is greater than in the welded metal as the temperature falls and thus the difference between the activity coefficients increases and hydrogen in the vessel wall reversely flows to the welded metal from the base metal. Also the diffusion coefficient of hydrogen in the welded metal is smaller than that in the base metal so hydrogen abnormally accumulates at the welded metal side of the boundary portion of the welded metal and the base metal and this is one cause of disbonding.

Regarding the metal structure of the boundary portion of the base metal and the welded metal, at the welded metal side, coarse austenite grains epitaxially grown with respect to the preaustenite grains at the base metal side are formed and further a mixture of this austenite phase and the net-work formed delta-ferrite phase is continuously formed. The above described disbonding is caused at the position corresponding to this coarse austenite grain boundary which is substantially parallel to the boundary. Carbides will have been precipitated in this coarse austenite grain boundary during the heat treatment after the overlay welding and these precipitated carbides greatly influence the disbonding together with the hydrogen accumulated during the shutdown.

Accordingly, the present invention aims to provide a method for preventing disbonding at the boundary between the base metal and the overlay welded metal at the inner surface of a chemical reactor vessel in which high-temperature, high-pressure hydrogen is handled when the above described lining is applied.

In addition, the present invention aims to provide a method for forming an overlay clad having excellent resistance to the above described disbonding and other excellent properties particularly high resistance to flexural elongation.

In USA—A—4,224,360 there is described an overlay welding method for the wall of a high pressure vessel intended to contain hydrogen at elevated temperature. The vessel wall is formed of a base metal such as forged steel overlaid with stainless steel by welding. In order to prevent disbonding, an intermediate layer is provided between the base metal and the stainless steel overlay by overlay welding. This intermediate layer is formed of a low alloy steel having substantially the same composition as the base metal and containing niobium and optionally nickel.

According to the present invention there is provided an overlay welding method wherein a base metal of carbon steel, low alloy steel or the like is overlay welded with a first metallic layer and then with a second metallic surface layer, the second metallic surface layer being of stainless steel, nickel alloy or the like and the first metallic layer being an austenitic stainless steel welded metal layer wherein the chromium equivalent is less than 26%, the delta-ferrite phase is less than 20%, the ratio of the chromium equivalent (Creq) to the nickel equivalent (Nieq) is more than 1.85, $Creq = \%Cr + \%Mo + 1.5 \times \%Si + 0.5 \times \%Nb$, and $Nieq = \%Ni + 30 \times \%C + 0.5 \times Mn$.

By means of the present invention the above described coarse austenite grains are not formed at the welded metal side in the boundary portion between the base metal and the welded metal and therefore disbonding can be effectively prevented. Also, the use of austenitic stainless steel confers other useful properties, particularly high resistance to hot cracking upon welding and excellent flexural elongation.

For a better understanding of the invention and to show how the same may be carried into effect, reference will now be made, by way of example, to the accompanying drawings in which:—

Fig. 1 is a graph showing the relationship between the nominal chemical composition (Cr equivalent and Ni equivalent) of the welded metal and the structure at the welded metal side of the boundary portion of the base metal and the welded metal, and

Fig. 2 is a graph showing the relationship between Creq/Nieq of the nominal chemical composition of the welded metal and the coarse grain percentage.

# 0 114 893

When the overlay welding of austenitic stainless steel is carried out, it is generally necessary for more than a few % of delta-ferrite phase to be present in order to prevent hot cracking upon welding and, since the present invention is concerned with overlay welding on the inner surface of a pressure vessel or the like which is to be used in a high-temperature high-pressure hydrogen environment, it is not desirable that martensite having a high sensibility to hydrogen cracking is contained in the welded metal. Therefore, the inventors made studies in order to establish an effective mixed structure of austenite and delta-ferrite for the first layer.

In general, the phase of stainless steel welded metal can be fairly correctly determined from the Ni equivalent and the Cr equivalent of the welded metal with reference to Schaeffler's phase diagram or Delong's phase diagram but the structure has not been studied. Even for the same chemical composition, the structure in the central portion is different to the structure in the boundary portion of the welded metal. Accordingly, the inventors made investigations with respect to the relationship between the structure in the vicinity of the boundary portion between the base metal and the welded metal, which has a high influence on disbonding, and the Ni equivalent and Cr equivalent in the nominal chemical composition of the welded metal. A correlation was found.

Table 1

| | Steel | C | Si | Mn | P | S | Ni | Cr | Mo | Nb |
|---|---|---|---|---|---|---|---|---|---|---|
| Base metal | SA387 Gr22 | 0.141 | 0.24 | 0.50 | 0.011 | 0.004 | - | 2.32 | 0.98 | - |
| Electrode | 308L (0.4$^t$×150$^w$ mm) | 0.005 | 0.27 | 1.80 | 0.015 | 0.003 | 9.11 | 19.34 | 0.03 | - |
| | 308L ( " ) | 0.005 | 0.12 | 1.99 | 0.015 | 0.003 | 9.96 | 20.33 | 0.03 | - |
| | 309L ( " ) | 0.007 | 0.27 | 1.75 | 0.016 | 0.004 | 12.13 | 22.22 | 0.02 | - |
| | 309L ( " ) | 0.014 | 0.23 | 1.96 | 0.015 | 0.003 | 14.91 | 23.83 | 0.03 | - |

Horizontal electroslag overlay welding was performed using a base metal in the form of a steel plate of SA387 Gr22 shown in Table 1 and combining four kinds of test electrodes of the Type 308L and 309L (see Table 1) with a fused type flux in which metallic Cr and/or metallic Ni were mixed with $CaF_2$-$Al_2O_3$-$SiO_2$-CaO.

The welding conditions were 2500 A, 28 V, and 14 cm/min and, after the welding, a heat treatment at 690°C was performed for 28 hours and the structure in the vicinity of the boundary portion between the base metal and the welded metal was observed by an optical microscope to determine the coarse grain percentage.

The coarse grain percentage is represented by the length of the austenite grain at the welded metal side parallel to the boundary between the base metal and the deposited metal/the length of said boundary.

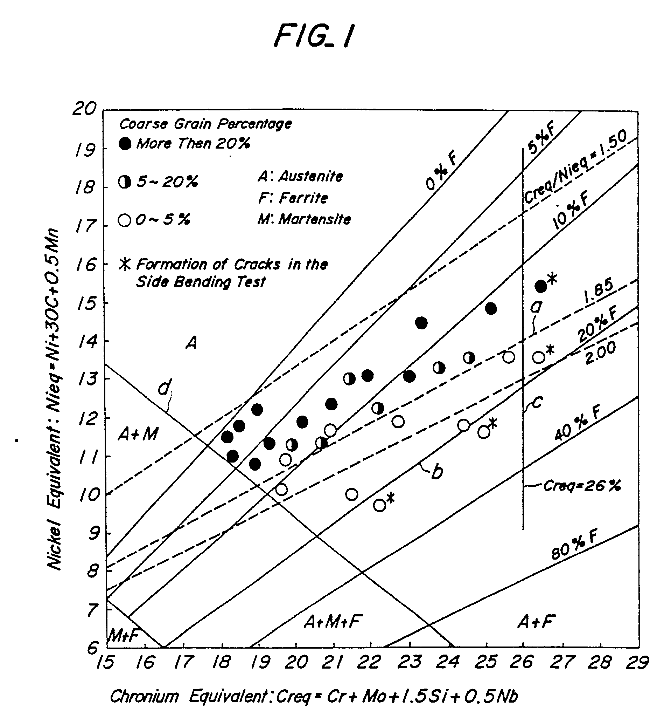

This result is shown in the Schaeffler's phase diagram of Fig. 1 wherein broken line a: the ratio of Creq/Nieq of the nominal chemical composition of the welded metal=1.85,
solid line b: delta-ferrite in the welded metal=20%
solid line c: Creq in the nominal chemical composition of the welded metal=26%,
solid line d: the boundary line of the austenite phase and the martensite phase in Schaeffler's phase diagram.

As can be seen from Fig. 1, when the ratio of Creq/Nieq of the nominal chemical composition of the welded metal is more than 1.85 (the broken line a in Fig. 1), the coarse grain percentage is less than 5% and observation of the structure indicates that austenite coarse grains are not substantially found in the boundary portion between the base metal and the welded metal of this chemical composition.

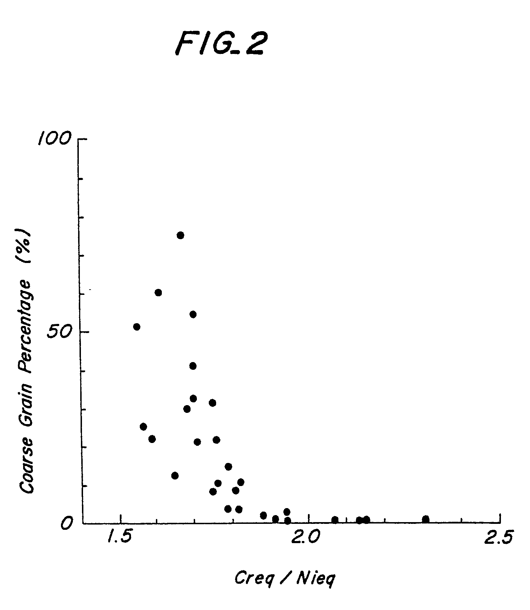

Fig. 2 shows the relationship between the coarse grain percentage and the ratio of Creq/Nieq of the nominal chemical composition of the welded metal and this shows clearly the above described effect.

In order to examine the resistance to disbonding in the presence of hydrogen at a high temperature and a high pressure with respect to some samples having different coarse grain percentages in the overlay welded steel plates (5 samples having 0—5%, 5 samples of 5—20%, 4 samples of 20—50% and 4 samples of 50—75% in the coarse grain percentage), test pieces having a thickness of 45 mm (thickness of stainless overlay cladding: 5 mm), a breadth of 55 mm and a length of 100 mm were prepared and these test pieces were exposed for 30 hours in an environment of hydrogen at 450°C and 150 kg/cm² using an autoclave and then cooled in air. One week after cooling, the test pieces were subjected to an ultrasonic flaw detector from the base metal side to determine the disbonding. The obtained results are shown in the following Table 2. From this table, it can be seen that the disbonding is increased or becomes remarkable with increase of the coarse grain percentage and it has been confirmed that when the coarse grain percentage is 0—5%, no disbonding is caused and high disbonding resistance is obtained.

Table 2

| Coarse grain percentage | Number of test pieces | No disbonding | Slight disbonding | Remarkable disbonding |
|---|---|---|---|---|
| 0-5% | 5 | 5 (100%) | 0 (0%) | 0 (0%) |
| 2-20% | 5 | 4 (80%) | 1 (20%) | 0 (0%) |
| 20-50% | 4 | 1 (25%) | 2 (50%) | 1 (25%) |
| 50-75% | 4 | 0 (0%) | 1 (25%) | 3 (75%) |

Thus it has been found that regarding the austenitic stainless steel overlay welded metal containing delta-ferrite, the coarse grain percentage is reduced with an increase of the ratio of Creq/Nieq of the nominal chemical composition of the welded metal, whereby disbonding resistance is improved and that it is necessary, for preventing disbonding, to make the above described ratio of Creq/Nieq to be more than 1.85 (the broken line a in Fig. 1).

As mentioned above, austenitic stainless steel overlay welded metal contains a delta-ferrite phase but even though this phase prevents hot cracking upon welding and serves to reduce the precipitation of chromium carbide at the austenite grain boundary, said phase is converted into σ phase by being heated at 500—900°C for a long time and the precipitation of this phase noticeably deteriorates the performances of the welded metal. Furthermore, when the chromium equivalent in the welded metal is high, the precipitation of the σ phase is promoted and such is not preferred. However, from the results of the side bending test (t=9.5 mm, R=19 mm, 180° bending) before exposing to high-temperature, high-pressure

5

**0 114 893**

hydrogen, it has been found that, as shown in Fig. 1, unless delta-ferrite is less than 20% (in Fig. 1, the solid line b) and the chromium equivalent is less than 26% (solid line c), the flexural elongation of the welded metal is deteriorated by the precipitation of the σ phase.

Detailed explanation has been made with respect to each characteristic of the present invention but the effects of the prevention of disbonding and the like will be explained with reference to the following examples.

A primary layer was formed on SA387 Gr22 steel plate base metal by horizontal electroslag overlay welding using a commercially available electrode of the type 309L as a comparative example and using various test electrodes as examples of the present invention in combination with a $CaF_2$-$Al_2O_3$-$SiO_2$-$CaO$ fused type flux (Comparative Example, Examples 1, 2, 3).

In addition, a primary layer was formed by horizontal electroslag overlay welding using a commercially available electrode of the type 309L as an example of the present invention in combination with $CaF_2$-$Al_2O_3$-$SiO_2$-$MgO$ bonded type flux containing 8% by weight of metallic chromium. This shows an example wherein the chemical composition of the welded metal is controlled by the flux (Example 4). The chemical composition of the base metal and the electrodes are listed in the following Table 3.

A secondary layer was overlay welded on these overlay welded beads using horizontal electroslag overlay welding and a type 347 electrode shown in Table 3. The welding conditions were 2,500 A, 28 V, and 14 cm/min and the heat treatment after the welding was 690°C for 28 hours.

The nominal chemical compositions of the 1st layers of welded metal of these overlay welds are shown in the following Table 4. The following Table 5 shows the results of the side bending test (t=9.5 mm, R=19 mm, 180° bending) and the disbonding test of these overlay welds. The disbonding test was performed with the ultrasonic test carried out one week after the exposure to high-temperature, high-pressure hydrogen (450°C, 150 kg/cm², 30 hours, cooling in air) in the same manner as mentioned above.

6

0 114 893

Table 3

| | Steel | C | Si | Mn | P | S | Ni | Cr | Mo | Nb |
|---|---|---|---|---|---|---|---|---|---|---|
| Base metal | SA387 Gr22 | 0.141 | 0.24 | 0.50 | 0.011 | 0.004 | - | 2.32 | 0.98 | - |
| Electrode (0.4×150 mm) | 309L | 0.005 | 0.36 | 1.88 | 0.022 | 0.001 | 12.24 | 22.21 | 0.005 | - |
| | 21Cr - 9Ni | 0.004 | 0.32 | 1.72 | 0.019 | 0.001 | 9.60 | 21.65 | 0.005 | - |
| | 24Cr - 11Ni | 0.004 | 0.28 | 1.82 | 0.018 | 0.001 | 11.35 | 24.32 | 0.005 | - |
| | 26Cr - 12Ni | 0.005 | 0.34 | 1.85 | 0.020 | 0.001 | 12.32 | 26.49 | 0.005 | - |
| | 347 | 0.018 | 0.38 | 1.83 | 0.017 | 0.004 | 10.41 | 19.36 | 0.010 | 0.70 |

Table 4

| | Electrode | C | Si | Mn | P | S | Ni | Cr | Mo | Nb |
|---|---|---|---|---|---|---|---|---|---|---|
| Comparative Example | 309L | 0.031 | 0.61 | 1.50 | 0.023 | 0.002 | 10.62 | 19.33 | 0.005 | <0.003 |
| Example 1 | 21Cr - 9Ni | 0.028 | 0.45 | 1.73 | 0.021 | 0.002 | 8.52 | 19.25 | 0.004 | <0.003 |
| Example 2 | 24Cr - 11Ni | 0.030 | 0.42 | 1.66 | 0.020 | 0.002 | 10.02 | 21.55 | 0.005 | <0.003 |
| Example 3 | 26Cr - 12Ni | 0.035 | 0.55 | 1.75 | 0.023 | 0.002 | 10.98 | 23.62 | 0.004 | <0.003 |
| Example 4 | 309L | 0.030 | 0.57 | 1.53 | 0.022 | 0.002 | 10.58 | 22.05 | 0.005 | <0.003 |

Table 5

|  | Creq. | Nieq. | $\frac{Creq.}{Nieq.}$ | Phase (Schaeffler's phase diagram) | Side bending test | Disbonding test |
|---|---|---|---|---|---|---|
| Comparative Example | 20.25 | 12.30 | 1.65 | A + 6%F | Good | Remarkable disbonding |
| Example 1 | 19.93 | 10.23 | 1.95 | A + 12%F | Good | No disbonding |
| Example 2 | 22.19 | 11.75 | 1.89 | A + 13%F | Good | No disbonding |
| Example 3 | 24.45 | 12.91 | 1.89 | A + 16%F | Good | No disbonding |
| Example 4 | 22.91 | 12.25 | 1.87 | A + 15%F | Good | No disbonding |

As shown in Table 5, the overlay welded metals according to the present invention have good flexural elongation and no disbonding is caused even under a severe environment of hydrogen at high temperature and high pressure and high disbonding resistance can be attained.

As can be seen from the above described examples, the effect of the present invention is still obtained if the chemical composition of the welded metal is controlled by the chemical composition of the welding electrodes using a given welding flux and welding conditions or if said chemical composition is controlled by adding alloy elements from the welding flux.

Industrial Applicability

As can be seen from the above detailed explanation, the present invention can be applied to the case where a surface layer lining of stainless steel, nickel alloy or the like is applied to a base metal of carbon steel, low alloy steel or the like by overlay welding, so that the present invention can be utilized for apparatus including a combination of such base metals and lining materials and particularly for chemical reactor vessels to be used in a high-temperature, high pressure hydrogen environment, such as a desulfurizing reactor for petroleum-refining, and vessels for similar applications.

**Claim**

An overlay welding method wherein a base metal of carbon steel, low alloy steel or the like is overlay welded with a first metallic layer and then with a second metallic surface layer, the second metallic surface layer being of stainless steel, nickel alloy or the like and the first metallic layer being an austenitic stainless steel welded metal layer wherein the chromium equivalent is less than 26%, the delta-ferrite phase is less than 20%, the ratio of the chromium equivalent (Creq) to the nickel equivalent (Nieq) is more than 1.85, Creq = %Cr+%Mo+1.5×%Si+0.5×%Nb, and Nieq = %Ni+30×%C+0.5×%Mn.

**Patentanspruch**

Auftragsschweißverfahren, worin auf ein Nichtedelmetall aus einem, Kohlenstoff-Stahl, einem niedriglegierten Stahl oder dergleichen eine erste metallische Schicht und danach eine zweite metallische Oberflächenschicht mittels Auftragsschweißen aufgebracht werden, wobei die zweite metallische Oberflächenschicht aus nichtrostendem Stahl, einer Nickel-Legierung oder dergleichen besteht und die erste metallische Schicht eine geschweißte Metallschicht aus austenitischem nichtrostenden Stahl besteht, worin das Chrom-Äquivalent kleiner als 26% ist, die delta-Ferrit-Phase weniger als 20% ausmacht, das Verhältnis des Chrom-Äquivalents (Creq) zu dem Nickel-Äquivalent (Nieq) größer als 1,85 ist, Creq = %Cr+%Mo+1,5×%Si+0,5×%Nb und Nieq = %Ni+30×%C+0,5×%Mn.

**Revendication**

Procédé de soudage par superposition, dans lequel un métal de base constitué d'acier au carbone, d'un acier faiblement allié ou assimilé, est soudé par superposition à une première couche métallique puis à une deuxième couche métallique de surface, la deuxième couche métallique de surface étant en acier inoxydable, en un alliage de nickel ou assimilé, et la première couche métallique étant une couche métallique soudée en acier inoxydable austénitique, l'équivalent chrome étant inférieur à 26%, la phase ferrite-delta étant inférieure à 20%, le rapport entre l'équivalent chrome (Creq) et l'équivalent nickel (Nieq) étant supérieur à 1,85, Creq = %Cr+%Mo+1,5×%Si+0,5×%Nb et Nieq = %Ni+30×%C+0,5×%Mn.

## FIG. 1

FIG. 2

Creq / Nieq